(19) **Europäisches Patentamt / European Patent Office / Office européen des brevets**

(11) **EP 3 445 124 A1**

(12) # EUROPEAN PATENT APPLICATION
published in accordance with Art. 153(4) EPC

(43) Date of publication:
**20.02.2019 Bulletin 2019/08**

(21) Application number: **16898277.5**

(22) Date of filing: **15.04.2016**

(51) Int Cl.:
**H04W 74/08** *(2009.01)*

(86) International application number:
**PCT/CN2016/079490**

(87) International publication number:
**WO 2017/177459 (19.10.2017 Gazette 2017/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Alcatel Lucent**
**91620 Nozay (FR)**

(72) Inventors:
• **SUN, Fanglei**
  **Shanghai 201206 (CN)**
• **SUN, Huan**
  **Shanghai 201206 (CN)**
• **YANG, Tao**
  **Shanghai 201206 (CN)**

(74) Representative: **DREISS Patentanwälte PartG mbB**
**Friedrichstraße 6**
**70174 Stuttgart (DE)**

(54) **METHOD FOR BASE STATION, METHOD FOR USER EQUIPMENT, BASE STATION, AND USER EQUIPMENT**

(57) Embodiments of the present disclosure provide a method for a base station, a method for a user device, a base station, and a user device. The method for the base station comprises: receiving a random access preamble from a user device through reception beamforming; and transmitting a random access response to the user device. The method for the user device comprises: transmitting a random access preamble to a base station; and receiving a random access response from the base station through reception beamforming. The embodiments of the present disclosure provide a random access channel procedure based on beamforming to combat strong path loss in a wireless communication environment (such as millimeter wave communication), so as to ensure uplink access of the user device effectively.

100

101
```
RECEIVE A RANDOM ACCESS PREAMBLE FROM A USER
DEVICE THROUGH RECEPTION BEAMFORMING
```

102
```
TRANSMIT A RANDOM ACCESS RESPONSE TO THE
USER DEVICE
```

**FIG. 1**

**EP 3 445 124 A1**

## Description

## FIELD

Embodiments of the present disclosure generally relate to communication technology, and more specifically, to a method for a base station, a method for a user device, a base station, and a user device.

## BACKGROUND

The goal of 5G physical layer of the 5th generation mobile communication technology is to provide high performance in data rate and latency with reduced cost and power consumption. To reach gigabit-per-second data rates for the next generation of mobile cellular communication standards, one option is to leverage large bandwidths available at millimeter wave frequencies. Working on millimeter wave frequencies, wireless channels have some hostile propagation qualities, including strong path loss, atmospheric and rain absorption, low diffraction around obstacles, and penetration through objects.

To overcome these hostile propagation qualities in a millimeter wave system, large antenna arrays and narrow beams are expected to be a key technique for data transmission. However, for the uplink (UL) random access channel (RACH), a LTE system only supports non-precoded transmission schemes. In the case of an unfavorable transmission quality, for instance, in a millimeter wave wireless communication system, due to the above characteristics of millimeter wave channels, a wireless transmission scheme using the LTE RACH may fail to meet the signal to interference and noise ratio (SINR) and coverage requirements in a wireless communication system (such as a millimeter wave system).

## SUMMARY

In view of the above technical problems in the prior art, embodiments of the present disclosure employ beamformed transmission and/or reception for a random access channel (RACH), and provide a method for a base station, a method for a user device, a base station, and a user device, thereby solving at least one of the above technical problems existing in the prior art.

According to a first aspect of the present disclosure, there is provided a method for a base station. The method comprises: receiving a random access preamble from a user device through reception beamforming; and transmitting a random access response to the user device.

In some embodiments, receiving the random access preamble from the user device through the reception beamforming may comprise: performing the reception beamforming based on a codebook; or deriving a receiving beam by a calculation based on a downlink channel measurement. In some embodiments, performing the reception beamforming based on the codebook may comprise: processing the random access preamble received from the user device using each codeword in the codebook iteratively; and selecting the processed random access preamble corresponding to an optimal codeword as the random access preamble received through the reception beamforming.

In some embodiments, transmitting the random access response to the user device may comprise: transmitting the random access response through beamformed or non-beamformed broadcasting. In some embodiments, transmitting the random access response to the user device may comprise: transmitting the random access response to the user device through transmission beamforming in a non-broadcasting manner. In some embodiments, transmitting the random access response to the user device through the transmission beamforming may comprise: performing the transmission beamforming on the random access response based on feedback information of a downlink channel state received from the user device; or performing the transmission beamforming on the random access response by searching in a codebook for a transmission codeword corresponding to an optimal reception codeword based on uplink channel information; or deriving a transmitting beam for the random access response by a calculation based on an uplink channel measurement.

In some embodiments, receiving the feedback information of the downlink channel state from the user device may comprise: receiving the feedback information of the downlink channel state in the random access preamble. In some embodiments, the feedback information of the downlink channel state may be explicitly attached to the random access preamble. In some embodiments, the feedback information of the downlink channel state may be implicitly represented by a location of the random access preamble or a group to which the random access preamble belongs. In some embodiments, the feedback information of the downlink channel state may include at least a beam identifier.

In some embodiments, the method may further comprise: in response to receiving the random access preamble from the user device, determining feedback information of an uplink channel state for the user device; and transmitting to the user device the determined feedback information of the uplink channel state. In some embodiments, transmitting to the user device the determined feedback information of the uplink channel state may comprise: transmitting the feedback information of the uplink channel state in the random access response. In some embodiments, the feedback information of the uplink channel state may include at least an optimal uplink beam direction or beam index.

In some embodiments, the method may further comprise: receiving Message 3 from the user device through reception beamforming. In some embodiments, receiving the Message 3 from the user device through the reception beamforming may comprise: performing the reception beamforming of the Message 3 using a codeword identical or similar to the codeword for the reception beamforming of the random access preamble. In some embodiments, receiving the Message 3 from the user device through the reception beamforming may comprise: performing the reception beamforming by searching in a codebook for an optimal reception codeword based on uplink channel information; or deriving a receiving beam for the Message 3 by a calculation based on an uplink channel measurement. In some embodiments, the method may further comprise: receiving, in the Message 3, an optimal downlink beam direction or beam index fed back by the user device.

In some embodiments, the method may further comprise: in response to receiving the Message 3 from the user device, transmitting Message 4 to the user device through transmission beamforming. In some embodiments, transmitting the Message 4 to the user device through the transmission beamforming may comprise: performing the transmission beamforming on the Message 4 using a codeword identical or similar to the codeword for the transmission beamforming of the random access response. In some embodiments, the method may further comprise: performing the transmission beamforming on the Message 4 based on an optimal downlink beam direction or beam index fed back by the user device; or performing the transmission beamforming on the Message 4 by searching in a codebook for a transmission codeword corresponding to an optimal reception codeword based on uplink channel information; or deriving a transmitting beam for the Message 4 by a calculation based on an uplink channel measurement.

In some embodiments, the random access preamble may be transmitted by the user device through transmission beamforming. In these embodiments, the transmission beamforming may comprise transmission beamforming performed by the user device based on a direction of departure derived from a downlink channel measurement. In some embodiments, transmitting the random access response to the user device may comprise: transmitting the random access response to the user device through transmission beamforming that is based on information of a direction of departure of the base station. In some embodiments, the method may further comprise: receiving the Message 3 from the user device based on a direction of arrival derived from an uplink channel measurement; or transmitting the Message 4 to the user device based on a direction of departure corresponding to the direction of arrival derived from the uplink channel measurement.

In some embodiments, receiving the random access preamble from the user device through the reception beamforming may comprise: receiving a same random access preamble from the user device for a plurality of times through the reception beamforming; and performing signal combination on the plurality of received random access preambles.

In some embodiments, the method may further comprise: optimizing transmission beamforming and reception beamforming using a correlation between a transmitting beam and a receiving beam if channel reciprocity holds.

According to a second aspect of the present disclosure, there is provided a method for a user device. The method comprises: transmitting a random access preamble to a base station; and receiving a random access response from the base station through reception beamforming.

In some embodiments, receiving the random access response from the base station through the reception beamforming may comprise: performing the reception beamforming based on a codebook; or deriving a receiving beam for the random access response by a calculation based on a downlink channel measurement. In some embodiments, performing the reception beamforming based on the codebook may comprise: processing the random access response received from the base station using each codeword in the codebook iteratively; and selecting the processed random access response corresponding to an optimal codeword as the random access response received through the reception beamforming.

In some embodiments, receiving the random access response from the base station through the reception beamforming may comprise: calculating a beamforming weight based on feedback information of a downlink channel state detected by the user device; and performing the reception beamforming using the calculated beamforming weight. In some embodiments, calculating the beamforming weight based on the feedback information of the downlink channel state detected by the user device may comprise: performing maximum ratio combining based on downlink channel information.

In some embodiments, the method may further comprise: transmitting feedback information of a downlink channel state to the base station. In some embodiments, transmitting the feedback information of the downlink channel state to the base station may comprise: transmitting the feedback information of the downlink channel state in the random access preamble. In some embodiments, the feedback information of the downlink channel state may be explicitly attached to the random access preamble. In some embodiments, the feedback information of the downlink channel state may be implicitly represented by a location of the random access preamble or a group to which the random access preamble belongs. In some embodiments, the feedback information of the downlink channel state may include at least a beam identifier.

In some embodiments, the method may further comprise: receiving feedback information of an uplink channel state from the base station. In some embodiments, receiving the feedback information of the uplink channel state from the base station may comprise: receiving the feedback information of the uplink channel state in the random access response. In some embodiments, the feedback information of the uplink channel state may include at least an optimal uplink beam direction or beam index.

In some embodiments, the method may further comprise: transmitting Message 3 to the base station through transmission beamforming. In some embodiments, transmitting the Message 3 to the base station through the transmission beamforming may comprise: performing the transmission beamforming on the Message 3 by searching in a codebook for a transmission codeword corresponding to an optimal reception codeword based on downlink channel information; or deriving a transmitting beam for the Message 3 by a calculation based on a downlink channel measurement. In some embodiments, transmitting the Message 3 to the base station through the transmission beamforming may comprise: receiving from the base station an optimal beam direction or beam index of an uplink channel; and performing the transmission beamforming based on the optimal beam direction or beam index. In some embodiments, receiving from the base station the optimal beam direction or beam index of the uplink channel may comprise: receiving in the random access response an optimal beam direction or beam index of the uplink channel.

In some embodiments, the method may further comprise: in response to receiving the random access response from the base station, feeding back to the base station an optimal beam direction or beam index of a downlink channel. In some embodiments, feeding back to the base station the optimal beam direction or beam index of the downlink channel may comprise: including the optimal beam direction or beam index of the downlink channel into the Message 3 for transmission. In some embodiments, the method may further comprise: receiving Message 4 from the base station through reception beamforming by searching in a codebook for an optimal reception codeword based on downlink channel information, or by deriving a receiving beam by a calculation based on an uplink channel measurement.

In some embodiments, transmitting the random access preamble to the base station may comprise: transmitting the random access preamble to the base station through transmission beamforming. In these embodiments, the transmission beamforming may comprise transmission beamforming based on a direction of departure corresponding to a direction of arrival derived from a downlink channel measurement. In some embodiments, the method may further comprise: estimating information of the direction of arrival of the user device using a downlink reference signal acquired in a downlink synchronization procedure or in a procedure of receiving a downlink control signal, in order to derive information of the direction of departure of the user device. In some embodiments, receiving the random access response from the base station through the reception beamforming may comprise: performing the reception beamforming using a reception beamforming codeword corresponding to a transmission beamforming codeword; or performing the reception beamforming by searching for an optimal beam in a predefined receiving codebook.

In some embodiments, the method may further comprise: transmitting the Message 3 to the base station based on a direction of departure corresponding to a direction of arrival derived from a downlink channel measurement; or receiving the Message 4 from the base station based on the direction of arrival derived from the downlink channel measurement.

In some embodiments, transmitting the random access preamble to the base station may comprise: transmitting a same random access preamble to the base station for a plurality of times. In some embodiments, transmitting the same random access preamble to the base station for a plurality of times may comprise: transmitting the same random access preamble to the base station for a plurality of times based on predetermined timing; or transmitting the same random access preamble to the base station for a plurality of times only if the random access response fails to be received successfully.

In some embodiments, the method may further comprise: optimizing transmission beamforming and reception beamforming using a correlation between a transmitting beam and a receiving beam if channel reciprocity holds.

According to a third aspect of the present disclosure, there is provided a base station. The base station comprises: a receiving unit configured to receive a random access preamble from a user device through reception beamforming; and a transmitting unit configured to transmit a random access response to the user device.

According to a fourth aspect of the present disclosure, there is provided a user device. The user device comprises: a transmitting unit configured to transmit a random access preamble to a base station; and a receiving unit configured to receive a random access response from the base station through reception beamforming.

Embodiments of the present disclosure propose a beamforming-based random access channel (RACH) procedure to combat strong path loss in wireless communication environments (such as millimeter wave communication), so as to ensure uplink access of a user device effectively.

**BRIEF DESCRIPTION OF THE DRAWINGS**

Through the following detailed description with reference to the accompanying drawings, the above and other objectives, features, and advantages of embodiments of the present disclosure will become more apparent. Several example embodiments of the present disclosure will be illustrated by way of example but not limitation in the drawings in which:

FIG. 1 schematically illustrates a flowchart of a method for a base station in accordance with an embodiment of the present disclosure.

FIG. 2 schematically illustrates a flowchart of a method for a user device in accordance with an embodiment of the present disclosure.

FIG. 3 schematically illustrates a signaling interaction diagram between a user device and a base station in accordance with an embodiment of the present disclosure.

FIG. 4 schematically illustrates a signaling interaction diagram between a user device and a base station in accordance with another embodiment of the present disclosure.

FIG. 5 schematically illustrates a signaling interaction diagram between a user device and a base station in accordance with yet another embodiment of the present disclosure.

FIG. 6 schematically illustrates a signaling interaction diagram between a user device and a base station in accordance with still another embodiment of the present disclosure.

FIG. 7 schematically illustrates a block diagram of a base station in accordance with an embodiment of the present disclosure.

FIG. 8 schematically illustrates a block diagram of a user device in accordance with an embodiment of the present disclosure.

## DETAILED DESCRIPTION OF EMBODIMENTS

Principles and spirits of the present disclosure will now be described with reference to various example embodiments illustrated in the drawings. It is to be understood that description of those embodiments is merely to enable those skilled in the art to better understand and further implement the present disclosure and not intended for limiting the scope disclosed herein in any manner.

Currently, there has been proposed a new frame structure for random access channel (RACH). The RACH frame consists of consecutive $N_{slots}$ RACH slots. In the RACH frame, $N_{slots}=M_{BS} \times M_{UE}$, where $M_{BS}$ is the number of receiving beams at a base station (BS), and $M_{UE}$ is the number of transmitting beams at a user device (UE). During these slots, each pair of a transmitting beam and a receiving beam is scanned with a same preamble transmission, to ensure that optimal performance on a certain beam pair can be searched in $N_{slots}$ RACH slots.

However, according to further analysis, the long duration of the RACH preamble has some negative impacts on initial access, radio link failure (RLF) recovery, and handovers. In addition, the implementation will also be constrained by a time division duplex (TDD) uplink-downlink (UL-DL) configuration with discontinuous uplink (UL) subframes. For possible approaches to these problems, several directions have been proposed, including enhancing preamble detection, increasing multiple digital chains at the BS, and so on. However, no detailed solution about beamforming for RACH has been given in the prior art.

In embodiments of the present disclosure, for an RACH procedure, to combat strong path loss in wireless communication (such as millimeter wave communication channels), there is proposed beamforming for transmission and reception of preambles and further Messages 2-4. Considering the strong processing capability at the base station side, it is able to use reception beamforming to enhance detection of preambles. To further enhance the receiving capability, transmission beamforming for the preambles at a user device can also be supported if an optimal direction from the user device towards the base station can be predicted. In addition, signal combination at a receiving side is also a complementary scheme to assist signal strength enhancement.

To support beamforming for transmission and/or reception, or signal combination at a receiving side, embodiments of the present disclosure define some new procedures in which some configurations, such as configuration of some related beamforming reference signals, may need to be known in advance. Moreover, a new channel state information (CSI) feedback/derived beam information (such as a beam direction) may need to be defined and fed back, to facilitate performing beamformed transmission.

In embodiments of the present disclosure, the term "user device" or "user equipment" (UE) refers to any device that can communicate with "base station" (BS). As an example, the user device may include terminal, mobile terminal (MT), subscriber station (SS), a portable subscriber station (PSS), a mobile station (MS), or an access terminal (AT). "Base station" (BS) may represent a node B (Node B or NB), an evolving node B (eNodeB or eNB), a remote radio unit (RRU), a radio head (RH), a remote radio head (RRH), a relay, a low power node, such as a pico base station, a femto base station, or the like.

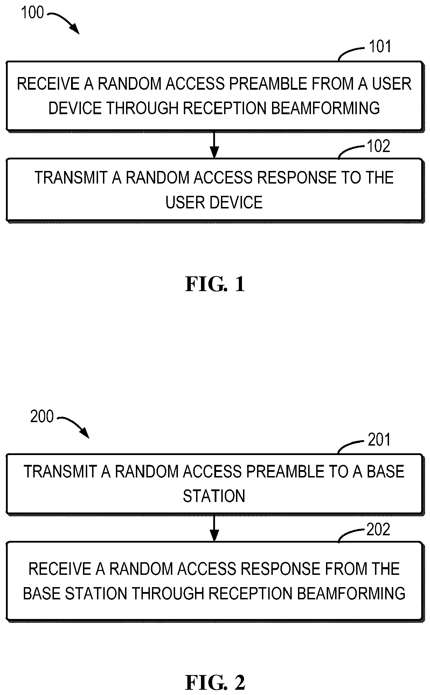

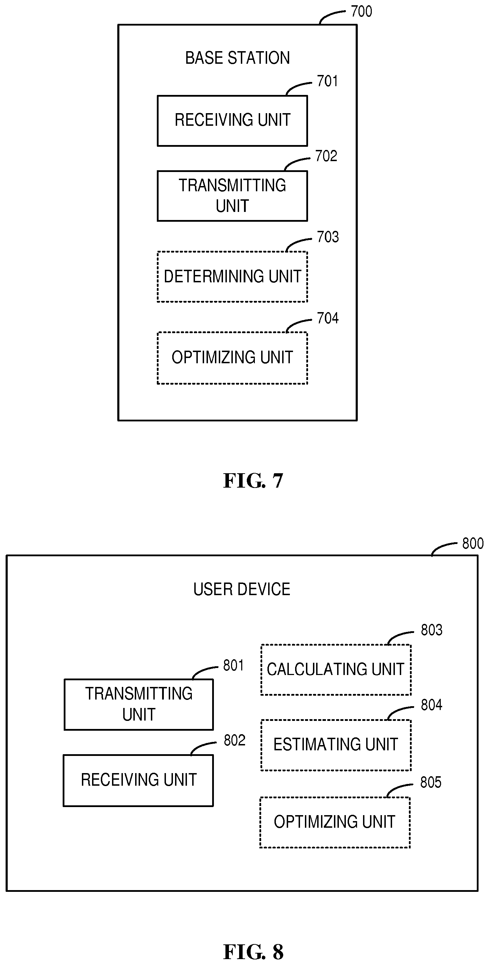

FIG. 1 schematically illustrates a flowchart of a method 100 for a base station in accordance with an embodiment of the present disclosure. In some embodiments, the method 100 may be performed by a base station in communication with a user device. In some other embodiments, the method 100 may be performed by a base station 700 described hereinafter in connection with FIG. 7.

As shown in FIG. 1, the method 100 includes a step 101 in which the base station 100 receives a random access preamble from a user device through reception beamforming. After the step 101, the method 100 proceeds to a step 102 in which the base station transmits a random access response to the user device.

As described above, it is better to employ beamforming technology through directional antennas for the transmission of random access preambles in the case of an adverse transmission quality, such as millimeter wireless transmission. During the random access channel (RACH) procedure, the user device may transmit a preamble on a RACH resource. In some embodiments, the transmission of the preamble may not use transmission beamforming because the user device possibly does not have any direction information of the uplink (UL) channel.

However, at the receiving side of the base station, it is possible to use reception beamforming to overcome the strong path loss incurred by the adverse propagation quality, such as a millimeter channel. Compared with downlink (DL) beamformed transmission, since the transmission power of the user device is less than that of the base station, to compensate for same path loss, a narrower beam may be used at the base station. Owing to the powerful processing capability of the base station, this scheme is totally acceptable.

In some embodiments, the step 101 may include: performing the reception beamforming based on a codebook; or deriving a receiving beam by a calculation based on a downlink channel measurement. In the latter case, it is assumed that the uplink and the downlink have reciprocity, so that a downlink transmitting beam may be derived. In some embodiments, performing the reception beamforming based on the codebook may include: processing the random access preamble received from the user device using each codeword in the codebook iteratively; and selecting the processed random access preamble corresponding to an optimal codeword as the random access preamble received through the reception beamforming.

For a beamforming matrix for performing reception beamforming at the base station, since there may be no channel information, codebook-based reception beamforming may be employed, such as a codebook based on discrete Fourier transform (DFT). For a preamble received from the user device, the base station uses different codewords in $W=\{w_i, i=1,..., N\}$, for instance, to iteratively process the preamble, where N is the number of beams. Then, the processed preamble corresponding to an optimal codeword (for example, $w_j$) is selected as the preamble received through beamforming. In each assigned transmission time interval (TTI) with RACH preamble transmission, the base station can perform this operation. Considering that a plurality of antennas are generally deployed at the base station, reception beamforming is more advantageous for a millimeter system or the like, which is different from the LTE system.

In some embodiments, the step 102 may include: transmitting the random access response through beamformed broadcasting or non-beamformed broadcasting. In some embodiments, the step 102 may include: transmitting the random access response to the user device through transmission beamforming in a non-broadcasting manner. In these embodiments, the step 102 may further include: performing the transmission beamforming on the random access response based on feedback information of a downlink channel state received from the user device; or performing the transmission beamforming on the random access response by searching in a codebook for a transmission codeword corresponding to an optimal reception codeword based on uplink channel information; or deriving a transmitting beam for the random access response by a calculation based on an uplink channel measurement. In the last case, it is assumed that the uplink and the downlink have reciprocity so that the downlink transmitting beam can be derived.

After receiving the random access preamble from the user device, the base station will feed back a random access response (RAR) to the user device whose preamble has been decoded successfully. Since a plurality of user devices may use the same preamble and the preambles of multiple user devices may have been decoded successfully, the RAR information is targeted for the multiple user devices. Therefore, the base station may employ a downlink (DL) broadcast/control channel for transmission enhancement. The broadcasting manner may include a beamformed broadcasting manner or a non-beamformed broadcasting manner. In some other embodiments, the base station may perform random access response (RAR) transmission for a particular user device, based on user device preferred reception beamforming information included in Message 1 (that is, the random access preamble).

In some embodiments, receiving the feedback information of the downlink channel state from the user device may include: receiving the feedback information of the downlink channel state in the random access preamble. In some embodiments, the feedback information of the downlink channel state may be attached explicitly to the random access preamble. In some embodiments, the feedback information of the downlink channel state may be implicitly represented by a location of the random access preamble or a group to which the random access preamble belongs. In some embodiments, the feedback information of the downlink channel state may include at least a beam identifier.

In these embodiments, before the RACH procedure is performed, the user device may obtain recent downlink (DL) channel state information, for example, this may be based on measurements of a downlink (DL) reference signal (RS) embedded in the downlink (DL) physical broadcast channel (PBCH) or in the downlink control channel, and so on. If the channel state information is still valid for the closely followed RACH procedure, then the downlink (DL) channel state information (CSI), such as beam ID information, the optimal precoded matrix identifier PMI in LTE and so on, can be fed back to the base station.

Therefore, in the step of transmitting the random access response, the base station may transmit, by means of transmission beamforming, the random access response (RAR) to the user device whose preamble has been received successfully. In some embodiments, the user device may attach the channel state information (CSI) to the preamble to be fed back to the base station.

The specific signaling manners may include: first, an explicit manner, for instance, attaching the channel state information (CSI) to the preamble and transmitting it to the base station; second, an implicit manner, for instance, the beam ID information may be represented implicitly by preamble location or groups. Those skilled in the art may understand that the signaling manners discussed here are also suitable for other feedback information mentioned in other steps in embodiments of the present disclosure.

As an optional embodiment, after preambles of multiple user devices are received, the base station may measure the uplink (UL) channel and enable feeding back an uplink optimal beam direction or beam index to the user devices with different preambles, which is very useful for the user devices to further enhance the transmitting performance of Message 3. The base station may embed this beamforming information in the random access responses (RAR) for each desired user devices.

In some embodiments, the method 100 may further include: in response to receiving the random access preamble from the user device, the base station may determine feedback information of an uplink channel state for the user device; and transmitting to the user device the determined feedback information of the uplink channel state. In some embodiments, transmitting to the user device the determined feedback information of the uplink channel state may include: transmitting the feedback information of the uplink channel state in the random access response. In some embodiments, the feedback information of the uplink channel state may include at least an uplink optimal beam direction or beam index.

After the random access response (RAR) from the base station is received, according to the procedure of random access signals, the user device may transmit Message 3 to the base station. Based on the below approach, the user device may further perform beamformed transmission of the Message 3.

In the interest of simplicity of uplink (UL) beamformed transmission, one approach is to use the maximum ratio transmission (MRT). When a RAR is received, the user device may detect a DL beamformed equivalent channel, for example $\left[ \overline{h}_i \right]_{N_r \times 1}$, then the corresponding MRT precoding vector may be $\left[ \overline{h}_i \right]_{N_r \times 1}^{\mathrm{H}}$. Another approach is to utilize uplink channel feedback information included by the base station in the random access response, for example a beam direction or beam index. In this way, given the fed back beam index or the calculated MRT precoding matrix, the user device can transmit the Message 3 to the base station through transmission beamforming on scheduled resources.

In some cases, in the step of transmitting the random access response (RAR) to the user device by the base station, the user device may have performed downlink (DL) synchronization and can receive the Master Information Block (MIB), a part of the System Information Block (SIB), and even a broadcasted random access response (RAR). Therefore, the user device has a chance of obtaining downlink (DL) beamforming information. This is useful for the enhancement of the further contention-resolution Massage 4 in RACH.

To obtain recent downlink (DL) beam information, at the user device side, the user device may have a downlink (DL) beamforming codebook. If the downlink (DL) reference signal (RS) is based on a non-precoded scheme, the optimal beam ID can be fed back to the base station as a precoding matrix indicator PMI feedback. Otherwise, if the downlink (DL) transmission is based on a beamformed transmission scheme, then the codebook, the beam search pattern, or the like used for downlink (DL) broadcasting information, such as timing and time period, may need to be known beforehand. Based on this predefined knowledge, the user device can feed back the optimal downlink (DL) beam direction or beam index to the base station. The user device may embed this information in the Message 3.

Therefore, in some embodiments, the method 100 may further include: receiving the Message 3 from the user device through reception beamforming. In some embodiments, receiving the Message 3 from the user device through the reception beamforming may include: performing the reception beamforming of the Message 3 using a codeword identical or similar to the codeword for the reception beamforming of the random access preamble. Those skilled in the art may understand that since the wireless channel may change over time, the codeword here may not be exactly the same as the codeword for previously receiving, but the two codewords are similar codewords. In some other embodiments, receiving the Message 3 from the user device through the reception beamforming may include: performing the reception beamforming by searching in the codebook for an optimal reception codeword based on uplink channel information; or deriving the receiving beam for the Message 3 by a calculation based on an uplink channel measurement. In the latter case, it is assumed that the uplink and the downlink have reciprocity, so that the downlink transmitting beam can be derived. In some embodiments, the method 100 may further include: receiving, in the Message 3, the optimal downlink beam direction or beam index fed back by the user device.

Since the base station has obtained the optimal reception beamforming for preamble reception in the step of receiving the random access preamble, for the simplicity of receiving the Message 3, the base station may not loop the plurality of beamforming codewords again, and can detect the desired Message 3 from the known beam vector (such as $w_j$) to simplify the processing at the base station. In some other cases, for more accurate reception, the base station may also process the received Message 3 using a plurality of beamforming codewords iteratively based on the used beamformed uplink (UL) channel.

In some embodiments, the method 100 may further include: in response to receiving the Message 3 from the user device, transmitting Message 4 to the user device through transmission beamforming. In some embodiments, transmitting the Message 4 to the user device through the transmission beamforming may include: performing the transmission beamforming on the Message 4 using a codeword identical or similar to the codeword for the transmission beamforming of the random access response. Those skilled in the art can understand that as the wireless channel may change over time, the codeword here may not be exactly the same as the codeword for previously transmitting, but the two codewords are similar codewords. In some embodiments, the method 100 may further include: performing the transmission beamforming on the Message 4 based on an optimal downlink beam direction or beam index fed back by the user device; or performing the transmission beamforming on the Message 4 by searching in a codebook for a transmission codeword corresponding to an optimal reception codeword based on uplink channel information; or deriving a transmitting beam for the Message 4 by a calculation based on an uplink channel measurement. In the last case, it is assumed that the uplink and the downlink have reciprocity, so that the downlink transmitting beam can be derived.

In the transmitting step of the Message 4 of the random access channel procedure, the base station may transmit the beamformed Message 4 for a particular user device. The used beamforming vector may be the beamforming vector used for Message 2 or the beamforming vector fed back in the previous step for the Message 3. In the step of transmitting the random access response, if the base station employs a beamformed broadcasting manner and beamformed transmission for a particular user device is employed in the step of transmitting the Message 4, the beamformed reference signal configuration may need to be known to the user device.

To combat strong path loss in millimeter wave transmission, for instance, and further compensate for the impact of weak transmission power at the user device side, a narrower beam can be considered for transmission. In a further embodiment of the present disclosure, there is proposed another transmission approach for enhancing uplink (UL) random access channel (RACH). That is, enhancing signal strength through transmission beamforming at the transmitting side.

Therefore, in some embodiments of the method 100, the random access preamble may be transmitted by the user device through transmission beamforming. In these embodiments, the transmission beamforming may include transmission beamforming performed by the user device based on a direction of departure derived from a downlink channel measurement. In some embodiments, transmitting the random access response to the user device may include: transmitting the random access response to the user device through transmission beamforming based on the information of a direction of departure of the base station. In some embodiments, the method 100 may further include: receiving the Message 3 from the user device based on a direction of arrival derived from an uplink channel measurement; or transmitting Message 4 to the user device based on a direction of departure corresponding to the direction of arrival derived from the uplink channel measurement.

Prior to the random access channel (RACH) procedure, the user device may have already performed downlink (DL) synchronization and have learned the downlink (DL) reference signaling configuration. Therefore, the user device can measure the downlink (DL) channel and the direction of arrival (DoA). Based on the obtained DoA information, that is, the information of the direction of departure (DoD) from the user device to the base station, the user device may search in a codebook for a transmission beamforming vector to transmit the uplink (UL) preamble, for example, search for the codeword having a minimum angle with respect to the DoD.

If the DoA measurement is based on the beamformed channel, when the base station receives the uplink (UL) signaling using a beam similar to the beam used for downlink (DL) beamformed transmission, the transmission beamforming vector of the user device derived based on DoD is applied. In general, the uplink (UL) transmission beamforming based on the DoD is primarily utilized in a scenario where the DoD of the uplink (UL) and the DoA of the downlink (DL) are substantially coincident.

For the random access response (RAR) transmission at the base station side, as described above, a non-beamformed manner with respect to broadcasting signaling may be employed. Moreover, beamformed transmission based on a predefined codebook or based on the DoD from the base station to the user device whose preamble has been received successfully may also be supported for signaling enhancement.

For the random access response (RAR) reception at the user device side, in the case where the transmitting end and the receiving end share the same codebook (which holds in many cases), a beam similar to the transmission beam may be used for a receiving beam. If the transmitting end and the receiving end use different codebooks, when receiving the RAR from the base station, the user device may search for an optimal beam by looping the codewords in a predetermined receiving codebook.

In the subsequent operations of the random access channel procedure, based on the update of beam according to the measured DoD or the beam direction feedback, the base station and the user device may communicate through beamformed transmission and reception.

In some embodiments, the step 102 may include: receiving a same random access preamble from the user device for a plurality of times through the reception beamforming; and performing signal combination on the plurality of received random access preambles.

In these embodiments, to enhance the preamble transmission during the random access channel (RACH) procedure, the user device may transmit a preamble for a plurality of times in the time domain to obtain time diversity. At the base station side, signal combination may be employed for signal improvement. Those skilled in the art shall appreciate that the times of retransmission is configurable, but for simplicity, in the depiction herein, only one retransmission is described as an example. For a plurality of times of retransmission of the preamble, there are two options.

The first option is that retransmission in the time domain is mandatory and the timing of retransmission is predefined. For example, assuming that the initial preamble transmission is on subframe n, retransmission may be scheduled on the first uplink (UL) subframe after the subframe n+k. Then, the base station may further schedule the following random access response (RAR) based on the retransmission timing.

The second option is that the retransmission in the time domain is not mandatory. If the base station receives the initially transmitted preamble successfully, then the random access response (RAR) may be transmitted with the reception beamforming in FIG. 1 as in the previously discussed four steps. In this case, the user device may no longer perform retransmission of the random access preamble. The advantage of this option is that the random access channel (RACH) procedure may be shortened in the case where the signal quality of a part of the preamble is good. However, the potential problem may be that some user devices with poor transmission quality may not have enough chance to access. In this regard, another fairness scheme may be introduced to balance the two factors.

In some embodiments, the method 100 may further include: if channel reciprocity holds, optimizing transmission beamforming and reception beamforming using a correlation between a transmitting beam and a receiving beam.

In these embodiments, considering the cost effectiveness of TDD operations and the possibility of utilizing large unpaired frequency bands, it is envisioned that TDD operations have significant advantages for the future 5G solution. The use of TDD mode also allows reduction of feedback overhead by means of the channel reciprocity between UL and DL, which is very beneficial for the massive multiple input multiple output (MIMO) technology that requires extensive channel state information. If the channel reciprocity holds, the transmitting beam and the receiving beam at the base station side or the user device side may be related, for example, they come from the same codebook or are derived from the same channel.

In this case, prior to the random access channel (RACH) procedure, the user device may receive a downlink (DL) reference signal (RS) for the beamformed channel or the non-beamformed channel. Based on this channel information and channel reciprocity, the user device can utilize the optimal beam direction to transmit uplink (UL) preamble and achieve higher performance gain.

It is assumed that the user device can obtain recent downlink (DL) channel state information, which is valid for the random access channel (RACH) procedure following closely. Based on the channel reciprocity, the user device may search for the optimal beamforming weight within a predefined codebook, or calculate the precoding weight for the subsequent beamformed preamble transmission, which can further enhance the successful probability of the random access channel (RACH) procedure.

At the base station side, the optimal beam for downlink (DL) transmission may also be used for uplink (UL) reception, which can simplify the beam pairing of the random access channel (RACH) procedure with respect to the user device. For the later steps where beamformed transmission channel is updated, the corresponding receiving beam and the transmitting beam later used for the next step may be optimized to obtain the optimal performance.

FIG. 2 schematically illustrates a flowchart of a method 200 for a user device in accordance with an embodiment of the present disclosure. In some embodiments, the method 200 may be performed by a user device in communication with a base station. In some other embodiments, the method 200 may be performed by the user device 800 described hereinafter with reference to FIG. 8.

Those skilled in the art may appreciate that the method 200 for user device and the method 100 for the user base station described previously are operation processes of two corresponding communication parties. Therefore, the method 200 may be understood with reference to the description of method 100. In the following description of the method 200, the repetitive content with the description of the method 100 may be omitted.

As shown in FIG. 2, the method 200 includes a step 201 where the user device transmits a random access preamble to a base station. After the step 201, the method 200 proceeds to a step 202 in which the user device receives a random access response from the base station through reception beamforming.

In some embodiments, the step 202 may include: performing the reception beamforming based on a codebook; or deriving a receiving beam for the random access response by a calculation based on a downlink channel measurement. In the latter scenario, it is assumed that the uplink and the downlink have reciprocity, so that the downlink transmitting beam can be derived. In some embodiments, performing the reception beamforming based on the codebook may include: processing the random access response received from the base station using each codeword in the codebook iteratively; and selecting the processed random access response corresponding to an optimal codeword as the random access response received through the reception beamforming.

In some embodiments, the step 202 may include: calculating a beamforming weight based on feedback information of a downlink channel state detected by the user device; and performing the reception beamforming using the calculated beamforming weight. In some embodiments, calculating the beamforming weight based on the feedback information of the downlink channel state detected by the user device may include: performing maximum ratio combining based on downlink channel information.

For the reception of the random access response (RAR) at the user device side, two options may be considered to further enhance the received signaling. The first option is to perform receiver beamforming by searching for an optimal beam in a predetermined codebook. The second option is to perform maximum ratio combining (MRC) based on the downlink (DL) channel detected by the user device based on the beamformed or non-beamformed reference signals (RS).

In some embodiments, the method 200 may further include: transmitting feedback information of a downlink channel state to the base station. In some embodiments, transmitting the feedback information of the downlink channel state to the base station may include: transmitting the feedback information of the downlink channel state in the random access preamble. In some embodiments, the feedback information of the downlink channel state may be attached to the random access preamble explicitly. In some embodiments, the feedback information of the downlink channel state may be represented implicitly by a location of the random access preambles or a group to which the random access preamble belongs. In some embodiments, the feedback information of the downlink channel state may include at least a beam identifier.

In these embodiments, prior to the RACH procedure, the user device may obtain recent downlink (DL) channel state information, for example, this may be based on a measurement of downlink (DL) reference signals (RS) embedded in the downlink (DL) physical broadcast channel (PBCH). If the channel state information is still valid for the RACH procedure following closely, then the downlink (DL) channel state information (CSI), such as beam ID information and an optimal precoding matrix indicator PMI in LTE, can be fed back to the base station.

In some embodiments, the user device may attach the channel state information (CSI) to the preamble for feedback to the base station. The specific signaling manners may include: first, an explicit manner, for example, attaching the channel state information (CSI) to the preamble and transmitting it to the base station; and second, an implicit manner, for example, the beam ID information may be represented implicitly by preamble location or groups. Those skilled in the art shall appreciate that the signaling manners discussed herein are also suitable for other feedback information mentioned in other steps in embodiments of the present disclosure.

In some embodiments, the method 200 may further include: receiving feedback information of an uplink channel state from the base station. In some embodiments, receiving the feedback information of the uplink channel state from the base station may further include: receiving the feedback information of the uplink channel state in the random access response. In some embodiments, the feedback information of the uplink channel state may include at least an optimal uplink beam direction or beam index.

In these embodiments, after receiving preambles from multiple user devices, the base station may measure the uplink (UL) channel and enable feeding back to user devices having different preambles the optimal beam directions or beam indexes, which is very useful for the user devices to further enhance the transmitting performance of Message 3. The base station may embed the beamforming information into the random access responses (RAR) for each desired user devices.

In some embodiments, the method 200 may further include: transmitting Message 3 to the base station through transmission beamforming. In some embodiments, transmitting the Message 3 to the base station through the transmission beamforming may include: performing the transmission beamforming on the Message 3 by searching in a codebook for the transmission codeword corresponding to an optimal reception codeword based on downlink channel information; or deriving a transmitting beam for the Message 3 by a calculation based on a downlink channel measurement. In the latter case, it is assumed that the uplink and the downlink have reciprocity, so that the uplink transmitting beam can be derived. In some embodiments, transmitting the Message 3 to the base station through the transmission beamforming may include: receiving from the base station an optimal beam direction or beam index of an uplink channel; and performing the transmission beamforming based on the optimal beam direction or beam index. In some embodiments, receiving from the base station the optimal beam direction or beam index of the uplink channel may include: receiving the optimal beam direction or beam index of the uplink channel in the random access response.

After receiving the random access response (RAR) from the base station, according to the procedure of random access signals, the user device may transmit the Message 3 to the base station. Based on the following approaches, the user device can further perform the beamformed transmission of the Message 3.

In the interest of simplicity of uplink (UL) beamformed transmission, one approach is to use the maximum ratio transmission (MRT). When a RAR is received, the user device may detect a DL beamformed equivalent channel, for example $\left[\overline{h_i}\right]_{N_r \times 1}$, then the corresponding MRT precoding vector may be $\left[\overline{h_i}\right]_{N_r \times 1}^{H}$. Another approach is to utilize uplink channel feedback information included by the base station in the random access response, for example a beam direction or beam index. In this way, given the fed back beam index or the calculated MRT precoding matrix, the user device can transmit the Message 3 to the base station through transmission beamforming on scheduled resources.

In some cases, in the step of transmitting the random access response (RAR) to the user device by the base station, the user device may have performed downlink (DL) synchronization and can receive the Master Information Block (MIB), a part of the System Information Block (SIB), and even a broadcasted random access response (RAR). Therefore, the user device has a chance of obtaining downlink (DL) beamforming information. This is useful for the enhancement of the further contention-resolution Massage 4 in RACH.

To obtain recent downlink (DL) beam information, at the user device side, the user device may have a downlink (DL) beamforming codebook. If the downlink (DL) reference signal (RS) is based on a non-precoded scheme, the optimal beam ID can be fed back to the base station as a precoding matrix indicator PMI feedback. Otherwise, if the downlink (DL) transmission is based on a beamformed transmission scheme, then the codebook, the beam search pattern, or the like used for downlink (DL) broadcasting information, such as timing and time period, may need to be known beforehand. Based on this predefined knowledge, the user device can feed back the optimal downlink (DL) beam direction or beam index to the base station. The user device may embed this information in the Message 3.

Therefore, in some embodiments, the method 200 may further include: in response to receiving the random access response from the base station, feeding back to the base station an optimal beam direction or beam index of a downlink channel. In some embodiments, feeding back to the base station the optimal beam direction or beam index of the downlink channel may include: including the optimal beam direction or beam index of downlink channel into the Message 3 for transmission. In some embodiments, the method 200 may further include: receiving the Message 4 from the base station through reception beamforming by searching in a codebook for an optimal reception codeword based on downlink channel information, or by deriving a receiving beam by a calculation based on an uplink channel measurement.

In some embodiments, the step 201 may include: transmitting the random access preamble to the base station through transmission beamforming. In these embodiments, the transmission beamforming may include transmission beamforming based on a direction of departure corresponding to a direction of arrival derived from a downlink channel measurement. In some embodiments, the method 200 may further include: estimating information of the direction of arrival of the user device using a downlink reference signal acquired in a downlink synchronization procedure or in a procedure of receiving a downlink control signal, in order to derive information of the direction of departure of the user device. In some embodiments, receiving the random access response from the base station through receiving beamforming may include: performing the reception beamforming using a reception beamforming codeword corresponding to a transmission beamforming codeword; or performing the reception beamforming by searching for an optimal beam in a predefined receiving codebook.

In some embodiments, the method 200 may further include: transmitting the Message 3 to the base station based on a direction of departure corresponding to a direction of arrival derived from a downlink channel measurement; or receiving the Message 4 from the base station based on the direction of arrival derived from the downlink channel measurement.

In these embodiments, prior to the random access channel (RACH) procedure, the user device may have already performed downlink (DL) synchronization and have learned the downlink (DL) reference signaling configuration. Therefore, the user device can measure the downlink (DL) channel and the direction of arrival (DoA). Based on the obtained DoA information, that is, the information of the direction of departure (DoD) from the user device to the base station, the user device may search in a codebook for a transmission beamforming vector to transmit the uplink (UL) preamble, for example, search for the codeword having a minimum angle with respect to the DoD.

If the DoA measurement is based on the beamformed channel, when the base station receives the uplink (UL) signaling using a beam similar to the beam used for downlink (DL) beamformed transmission, the transmission beamforming vector of the user device derived based on DoD is applied. In general, the uplink (UL) transmission beamforming based on the DoD is primarily utilized in a scenario where the DoD of the uplink (UL) and the DoA of the downlink (DL) are substantially coincident.

For the random access response (RAR) transmission at the base station side, as described above, a non-beamformed manner with respect to broadcasting signaling may be employed. Moreover, beamformed transmission based on a predefined codebook or based on the DoD from the base station to the user device whose preamble has been received successfully may also be supported for signaling enhancement.

For the random access response (RAR) reception at the user device side, in the case where the transmitting end and the receiving end share the same codebook (which holds in many cases), a beam similar to the transmission beam may be used for a receiving beam. If the transmitting end and the receiving end use different codebooks, when receiving the RAR from the base station, the user device may search for an optimal beam by looping the codewords in a predetermined receiving codebook.

In the subsequent operations of the random access channel procedure, based on the update of beam according to the measured DoD or the beam direction feedback, the base station and the user device may communicate through beamformed transmission and reception.

In some embodiments, the step 201 may include: transmitting a same random access preamble to the base station for a plurality of times. In some embodiments, transmitting the same random access preamble to the base station for a plurality of times may include: transmitting the same random access preamble to the base station for a plurality of times based on predetermined timing; or transmitting the same random access preamble to the base station for a plurality of times only if the random access response fails to be received successfully.

In these embodiments, to enhance the preamble transmission during the random access channel (RACH) procedure, the user device may transmit a preamble for a plurality of times in the time domain to obtain time diversity. At the base station side, signal combiation may be employed for signal improvement.

In some embodiments, the method 200 may further include: if channel reciprocity holds, optimizing transmission beamforming and reception beamforming using a correlation between a transmitting beam and a receiving beam. In these embodiments, considering the cost effectiveness of TDD operations and the possibility of utilizing large unpaired frequency bands, it is envisioned that TDD operations have significant advantages for the future 5G solution. The use of TDD mode also allows reduction of feedback overhead by means of the channel reciprocity between UL and DL, which is very beneficial for massive multiple input multiple output (MIMO) technology that requires extensive channel state information. If the channel reciprocity holds, the transmitting beam and the receiving beam at the base station side or the user device side may be related, for example, they come from the same codebook or are derived from the same channel.

In this case, prior to the random access channel (RACH) procedure, the user device may receive a downlink (DL) reference signal (RS) for the beamformed channel or the non-beamformed channel. Based on this channel information and channel reciprocity, the user device can utilize the optimal beam direction to transmit uplink (UL) preamble and achieve higher performance gain.

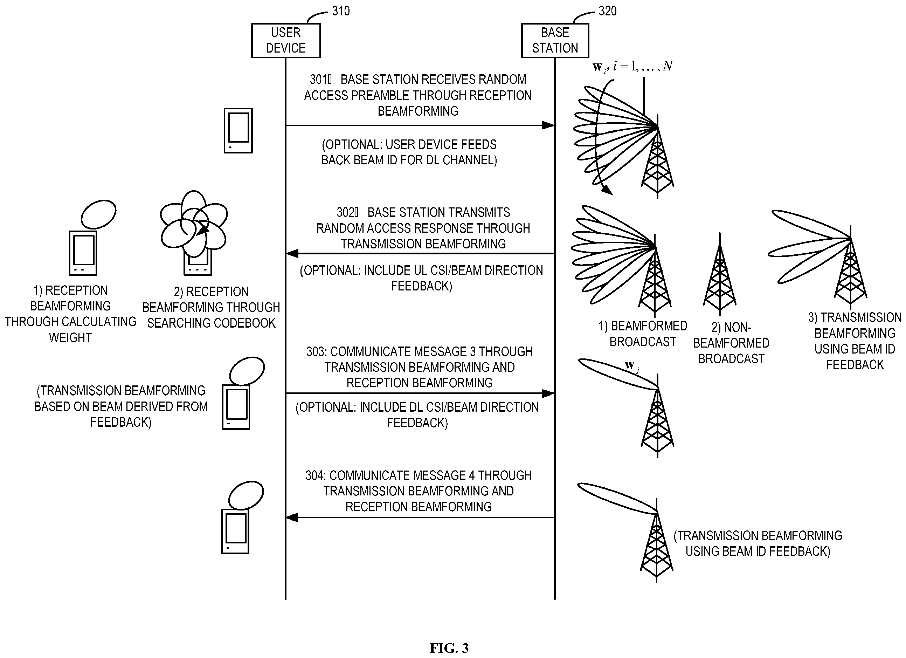

FIG. 3 schematically illustrates a signaling interaction diagram 300 between a user device and a base station in accordance with an embodiment of the present disclosure. It is to be understood that FIG. 3 only illustratively shows a possible signaling interaction process between the user device 310 and the base station 320 in accordance with embodiments of the present disclosure. Embodiments of the present disclosure may be implemented without the details shown in FIG. 3. The scope of the present disclosure is not limited by the specific details depicted in FIG. 3.

As shown in FIG. 3, at a step 301, the user device 310 may transmit a random access preamble to the base station 320 to initiate a random access channel (RACH) procedure. In the specific example shown in FIG. 3, the user device 310 does not transmit the random access preamble using transmission beamforming. Moreover, the base station 320 may receive random access preambles from a plurality of user devices 310 and there may be multiple user devices 310 which transmit the same random access preamble to the base station 320. At the base station 320, the random access preamble may be received from the user device 310 through reception beamforming. For example, the base station 320 may employ codebook-based reception beamforming or perform the reception beamforming based on the uplink (DL) channel information (such as a beam ID) fed back by the user device 310 in the random access preamble.

At a step 302, the base station 320 may transmit a random access response to the user device 310 in a beamformed broadcasting manner, a non-beamformed broadcasting manner or a transmission beamforming manner using beam ID feedback information. In the case of transmission beamforming using the beam ID feedback information, the base station 320 transmits a random access response to a particular user device 310 or a particular group of user devices 310. Optionally, the base station 320 may include a feedback of uplink (UL) channel state information (CSI) or beam direction information in the random access response. At the user device 310, in receiving the random access response, the reception beamforming may be performed by calculating a beamforming weight, or by searching a codebook.

At a step 303, the user device 310 may perform transmission beamforming on Message 3 based on information like the beam direction derived from the feedback information of the base station 320. Optionally, the user device 310 may include a feedback of downlink (DL) channel state information (CSI) or beam direction in the Message 3. At base station 320, the beam direction used in the step 301 may be employed to perform the reception beamforming for the Message 3. In some other cases, for more accurate reception, the base station 320 may also search for an optimal codeword in a codebook to perform the reception beamforming for the Message 3 based on the utilized beamformed uplink (UL) channel.

At a step 304, the base station 320 may perform transmission beamforming for Message 4 using a codeword identical or similar to the codeword for transmitting the random access response, or based on feedback information from the user device 310. Correspondingly, the user device 310 may perform the reception beamforming for the Message 4 using a codeword identical or similar to the codeword for receiving the random access response or based on the feedback information from the base station 320.

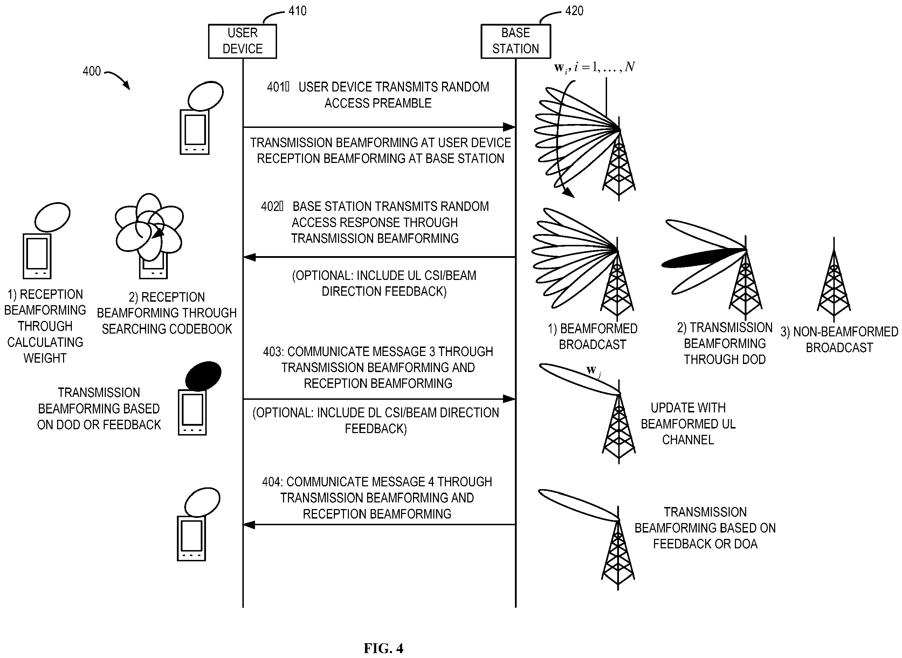

FIG. 4 schematically illustrates a signaling interaction diagram 400 between a user device and a base station in accordance with another embodiment of the present disclosure. It is to be understood that FIG. 4 only illustratively shows a possible signaling interaction process between the user device 410 and the base station 420 in accordance with embodiments of the present disclosure. Embodiments of the present disclosure may be implemented without the details shown in FIG. 4. The scope of the present disclosure is not limited by the specific details depicted in FIG. 4.

As shown in FIG. 4, the difference between the interaction process shown in FIG. 4 and the interaction process of FIG. 3 is that the user device 410 transmits a random access preamble to the base station 420 through transmission beamforming. Prior to the random access channel (RACH) procedure, the user device 410 may have already performed downlink (DL) synchronization and have known the downlink (DL) reference signaling configuration. Therefore, the user device 410 can measure the downlink (DL) channel and a measurement of the direction of arrival (DoA).

Therefore, in the step 401, based on the obtained DoA information, that is, information of the direction of departure (DoD) from the user device 410 to the base station 420, the user device 410 may search in a codebook for a transmission beamforming vector to transmit an uplink (UL) preamble, for example, search for the codeword having a minimum angle with respect to the DoD.

In the subsequent steps 402, 403 and 404, the general interaction process between the user device 410 and the base station 420 is substantially similar to that shown in FIG. 3. The difference is that the user device 410 and the base station 420 may utilize their respective information of the direction of departure (DoD) to perform transmission beamforming, and employ their respective information of the direction of arrival (DoA) to perform reception beamforming.

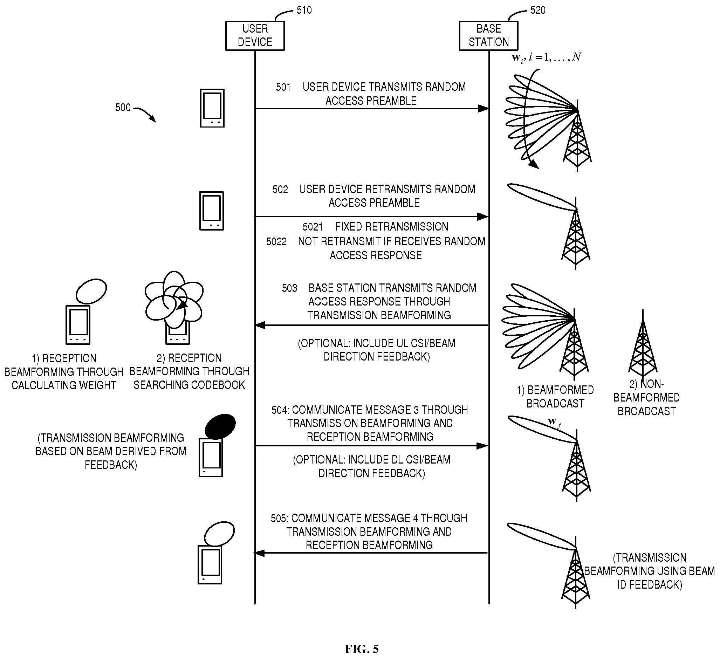

FIG. 5 schematically illustrates a signaling interaction diagram 500 between a user device and a base station in accordance with yet another embodiment of the present disclosure. It is to be understood that FIG. 5 only illustratively shows a possible signaling interaction process between the user device 510 and the base station 520 in accordance with embodiments of the present disclosure. Embodiments of the present disclosure may be implemented without the details shown in FIG. 5. The scope of the present disclosure is not limited by the specific details depicted in FIG. 5.

As shown in FIG. 5, the difference between the interaction process shown in FIG. 5 and the interaction process of FIG. 3 is that the user device 510 may transmit a random access preamble for a plurality of times to the base station 520 in a time diversity manner. For example, in the step 501, the user device 510 may transmit the random access preamble to the base station 520. In the step 502, the user device 510 may transmit the same random access preamble again to the base station 520. At base station 520, signal combination may be performed for the plurality of received random access preambles.

As a specific implementation, the user device 510 may employ either of two retransmission approaches. One approach is shown in FIG. 5 with the reference number 5021, where the user device 510 transmits the random access preamble for a plurality of times based on predefined timing, regardless of whether a random access response is received from the base station 520. The other approach is shown by the reference number 5022 in FIG. 5, where the random access preamble will no longer be retransmitted if the user device 510 receives a random access response from the base station 520. The subsequent steps 503, 504 and 505 in FIG. 5 are similar to the steps shown in FIG. 3 and will not be repeated here.

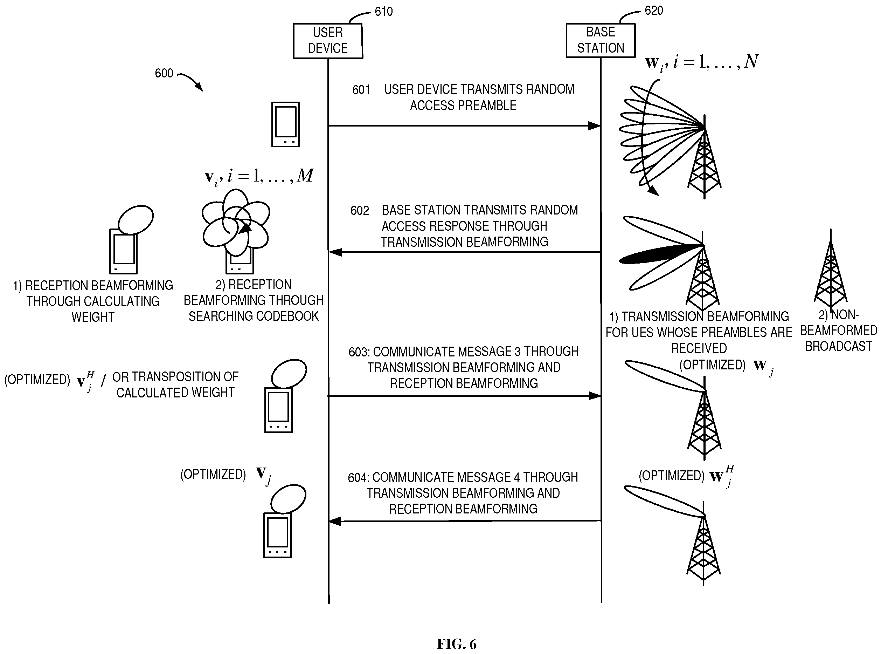

FIG. 6 schematically illustrates a signaling interaction diagram 600 between a user device and a base station in accordance with still another embodiment of the present disclosure. It is to be understood that FIG. 6 only illustratively shows a possible signaling interaction process between the user device 610 and the base station 620 in accordance with embodiments of the present disclosure. Embodiments of the present disclosure may be implemented without the details shown in FIG. 6. The scope of the present disclosure is not limited by the specific details depicted in FIG. 6.

As shown in FIG. 6, the difference between the interaction process shown in FIG. 6 and the interaction process of FIG. 3 is that the case where the channel reciprocity holds is depicted (for example, in a time division duplex TDD transmission mode). The user device 610 and the base station 620 may employ the channel reciprocity to optimize transmission beamforming and reception beamforming.

In this case, before the random access channel (RACH) procedure, the user device 610 may receive a downlink (DL) reference signal (RS) for a beamformed channel or a non-beamfomed channel. Based on this channel information and the channel reciprocity, the user device 610 can utilize the optimal beam direction to transmit an uplink (UL) preamble and achieve higher performance gain. It is assumed that the user device 610 can obtain recent downlink (DL) channel state information, which is valid for the random access channel (RACH) procedure following closely. Based on the channel reciprocity, the user device 610 may search for an optimal beamforming weight within a predefined codebook, or calculate a precoding weight for the subsequent beamformed preamble transmission, which can further increase the successful probability of the random access channel (RACH) procedure.

At the base station 620, the optimal beam for downlink (DL) transmission may also be used for uplink (UL) reception, which can simplify the beam pairing of the random access channel (RACH) procedure with respect to the user device. For the later steps where beamformed transmission channel is updated, the corresponding receiving beam and the transmitting beam later used for the next step may be optimized to obtain the optimal performance. Other steps in FIG. 6 are similar to the corresponding steps in FIG. 3 and will not be repeated here.

FIG. 7 schematically illustrates a block diagram of a base station 700 in accordance with embodiments of the present disclosure. Those skilled in the art shall appreciate that FIG. 7 only illustratively shows units or components in the base station 700 closely related to embodiments of the present disclosure. In practice, the base station 700 may include other functional units or components that enable its normal operation. Moreover, units or components shown in FIG. 7 may be in necessary connection relations. However, for the sake of conciseness, these connection relations are not described in FIG. 7. In FIG. 7, dotted blocks represent optional units or components.

As shown in FIG. 7, the base station 700 includes a receiving unit 701 configured to receive a random access preamble from a user device through reception beamforming and a transmitting unit 702 configured to transmit a random access response to the user device.

In some embodiments, the receiving unit 701 may be further configured to: perform the reception beamforming based on a codebook; or derive a receiving beam by a calculation based on a downlink channel measurement. In some embodiments, the receiving unit 701 may be further configured to: process the random access preamble received from the user device using each codeword in the codebook iteratively; and select the processed random access preamble corresponding to an optimal codeword as the random access preamble received through the reception beamforming.

In some embodiments, the transmitting unit 702 may be further configured to: transmit the random access response through beamformed broadcasting or non-beamformed broadcasting. In some embodiments, the transmitting unit 702 may be further configured to: transmit the random access response to the user device through transmission beamforming in a non-broadcasting manner. In some embodiments, the transiting unit 702 may be further configured to: perform the transmission beamforming on the random access response based on feedback information of a downlink channel state received from the user device; or perform the transmission beamforming on the random access response by searching in a codebook for a transmission codeword corresponding to an optimal codeword based on uplink channel information; or derive a transmitting beam for the random access response by a calculate based on an uplink channel measurement.

In some embodiments, the receiving unit 701 may be further configured to: receive the feedback information of the downlink channel state in the random access preamble. In some embodiments, the feedback information of the downlink channel state may be attached to the random access preamble explicitly. In some embodiments, the feedback information of the downlink channel state may be represented implicitly by a location of the random access preamble or a group to which the random access preamble belongs. In some embodiments, the feedback information of the downlink channel state may include at least a beam identifier.

In some embodiments, the base station 700 may further include: a determining unit 703 configured to determine feedback information of an uplink channel state for the user device in response to receiving the random access preamble from the user device; and the transmitting unit 702 may be further configured to: transmit to the user device the determined feedback information of the uplink channel state.

In some embodiments, the transmitting unit 702 may be further configured to: transmit the feedback information of the uplink channel state in the random access response. In some embodiments, the feedback information of the uplink channel state may include at least an optimal uplink beam direction or beam index.

In some embodiments, the receiving unit 701 may be further configured to: receive Message 3 from the user device through reception beamforming. In some embodiments, the receiving unit 701 may be further configured to: perform the reception beamforming of the Message 3 using a codeword identical or similar to the codeword for the reception beamforming of the random access preamble. In some embodiments, the receiving unit 701 may be further configured to: perform the reception beamforming by searching in a codebook for an optimal reception codeword based on uplink channel information; or derive a receiving beam for the Message 3 by a calculation based on an uplink channel measurement. In some embodiments, the receiving unit 701 may be further configured to: receive, in the Message 3, an optimal downlink beam direction or beam index fed back by the user device.

In some embodiments, the transmitting unit 702 may be further configured to: in response to receiving the Message 3 from the user device, transmit Message 4 to the user device through transmission beamforming. In some embodiments, the transmitting unit 702 may be further configured to: perform the transmission beamforming on the Message 4 using a codeword identical or similar to the codeword for the transmission beamforming of the random access response. In some embodiments, the transmitting unit 702 may be further configured to: perform the transmission beamforming on the Message 4 based on an optimal downlink beam direction or beam index fed back by the user device; or perform the transmission beamforming on the Message 4 by searching in a codebook for a transmission codeword corresponding to an optimal reception codeword based on uplink channel information; or derive a transmitting beam for the Message 4 by a calculation based on an uplink channel measurement.

In some embodiments, the random access preamble may be transmitted by the user device through transmission beamforming. In some embodiments, the transmission beamforming may include transmission beamforming performed by the user device based on a direction of departure derived from a downlink channel measurement. In some embodiments, the transmitting unit 702 may be further configured to: transmit the random access response to the user device through transmission beamforming that is based on information of a direction of departure of the base station. In some embodiments, the receiving unit 701 may be further configured to: receive the Message 3 from the user device based on a direction of arrival derived from an uplink channel measurement; or the transmitting unit 702 may be further configured to: transmit the Message 4 to the user device based on a direction of departure corresponding to the direction of arrival derived from the uplink channel measurement.

In some embodiments, the receiving unit 701 may be further configured to: receive a same random access preamble from the user device for a plurality of times through the reception beamforming; and performing signal combination on the plurality of received random access preambles.

In some embodiments, the base station 700 may further include: an optimizing unit 704 configured to optimize transmission beamforming and reception beamforming using a correlation between a transmitting beam and a receiving beam if channel reciprocity holds.

FIG. 8 schematically illustrates a block diagram of a user device 800 in accordance with embodiments of the present disclosure. It shall be appreciated by those skilled in the art that FIG. 8 only illustrates units or components in the user device 800 closely related to embodiments of the present disclosure. In practice, the user device 800 may include other functional units or components that enable its normal operation. Moreover, units or components shown in FIG. 8 may be in necessary connection relations. However, for the sake of conciseness, these connection relations are not described in FIG. 8. In FIG. 8, dotted blocks represent optional units or components.

As shown in FIG. 8, the user device 800 includes a transmitting unit 801 configured to transmit a random access preamble to a base station and a receiving unit 802 configured to receive a random access response from the base station through reception beamforming.

In some embodiments, the receiving unit 802 may be further configured to: perform the reception beamforming based on a codebook; or derive a receiving beam for the random access response by a calculation based on a downlink channel measurement. In some embodiments, the receiving unit 802 may be further configured to: process the random access response received from the base station using each codeword in the codebook iteratively; and select the processed random access response corresponding to an optimal codeword as the random access response received through the reception beamforming.

In some embodiments, the user device 800 may further include: a calculating unit 803 configured to calculate a beamforming weight based on feedback information of a downlink channel state detected by the user device; and the receiving unit 802 may be further configured to perform the reception beamforming using the calculated beamforming weight. In some embodiments, the receiving unit 802 may be further configured to: perform maximum ratio combining based on downlink channel information.

In some embodiments, the transmitting unit 801 may be further configured to: transmit feedback information of a downlink channel state to the base station. In some embodiments, the transmitting unit 801 may be further configured to: transmit the feedback information of downlink channel state in the random access preamble. In some embodiments, the feedback information of the downlink channel state may be explicitly attached to the random access preamble. In some embodiments, the feedback information of the downlink channel state may be implicitly represented by a location of the random access preamble or a group to which the random access preamble belongs. In some embodiments, the feedback information of the downlink channel state may include at least a beam identifier.

In some embodiments, the receiving unit 802 may be further configured to: receive feedback information of an uplink channel state from the base station. In some embodiments, the receiving unit 802 may be further configured to: receive the feedback information of the uplink channel state in the random access response. In some embodiments, the feedback information of the uplink channel state may include at least an optimal uplink beam direction or beam index.

In some embodiments, the transmitting unit 801 may be further configured to: transmit Message 3 to the base station through transmission beamforming. In some embodiments, the transmitting unit 801 may be further configured to: perform the beamforming of the Message 3 by searching in a codebook for a transmission codeword corresponding to an optimal reception codeword based on downlink channel information; or derive a transmitting beam for the Message 3 by a calculation based on a downlink channel measurement. In some embodiments, the transmitting unit 801 may be further configured to: receive from the base station an optimal beam direction or beam index of an uplink channel; and perform the transmission beamforming based on the optimal beam direction or beam index.

In some embodiments, the receiving unit 802 may be further configured to: receive the optimal beam direction or beam index of the uplink channel in the random access response. In some embodiments, the transmitting unit 801 may be further configured to: feed back to the base station an optimal beam direction or beam index of a downlink channel, in response to receiving the random access response from the base station. In some embodiments, the transmitting unit 801 may be further configured to: include the optimal beam direction or beam index of the downlink channel into the Message 3 for transmission. In some embodiments, the receiving unit 802 may be further configured to: receive the Message 4 from the base station through reception beamforming by searching in a codebook for an optimal reception codeword based on downlink channel information or by deriving a receiving beam by a calculation based on an uplink channel measurement.

In some embodiments, the transmitting unit 801 may be further configured to: transmit the random access preamble to the base station through transmission beamforming. In some embodiments, the transmission beamforming may include transmission beamforming based on a direction of departure corresponding to a direction of arrival derived from a downlink channel measurement. In some embodiments, the user device 800 may further include: an estimating unit 804 configured to estimate information of the direction of arrival of the user device using a downlink reference signal acquired in a downlink synchronization procedure or in a procedure of receiving a downlink control signal, in order to derive information of the direction of departure of the user device.

In some embodiments, the receiving unit 802 may be further configured to: perform the reception beamforming using a reception beamforming codeword corresponding to a transmission beamforming codeword; or perform the reception beamforming by searching for an optimal beam in a predefined receiving codebook. In some embodiments, the transmitting unit 801 may be further configured to: transmit the Message 3 to the base station based on a direction of departure corresponding to a direction of arrival derived from a downlink channel measurement; or receive the Message 4 from the base station based on the direction of arrival derived from the downlink channel measurement.

In some embodiments, the transiting unit 801 may be further configured to: transmit a same random access preamble to the base station for a plurality of times. In some embodiments, the transmitting unit 801 may be further configured to: transmit the same random access preamble to the base station for a plurality of times based on predetermined timing; or transmit the same random access preamble to the base station for a plurality of times only if the random access response fails to be received successfully.

In some embodiments, the user device 800 may further include: an optimizing unit 805 configured to optimize transmission beamforming and reception beamforming using a correlation between a transmitting beam and a receiving beam if channel reciprocity holds.

As used in depiction of embodiments of the present disclosure, the term "includes" and its variants are to be read as open-ended terms that mean "includes, but is not limited to". The term "based on" is to be read as "based at least in part on". The term "one embodiment" or "the embodiment" is to be read as "at least one embodiment."

It should be noted that the embodiments of the present disclosure can be realized by hardware, software or a combination of hardware and software, where the hardware part can be implemented by a special logic;

the software part can be stored in a memory and executed by a suitable instruction execution system such as a microprocessor or a special-purpose hardware. Ordinary skilled in the art may understand that the above system and method may be implemented with computer executable instructions and/or in processor-controlled code which is provided on a carrier medium such as a programmable memory or a data bearer such as an optical or electronic signal bearer.

Furthermore, although operations of the present methods are described in a particular order in the drawings, it does not require or imply that these operations are necessarily performed according to this particular sequence, or a desired outcome can only be achieved by performing all shown operations. On the contrary, the execution order for the steps as depicted in the flowcharts may be varied. Alternatively, or in addition, some steps may be omitted, a plurality of steps may be merged into one step, and/or a step may be divided into a plurality of steps for execution. It will be noted that the features and functions of two or more units described above may be embodied in one unit. In turn, the features and functions of one unit described above may be further embodied in more units.

Although the present disclosure has been described with reference to various embodiments, it should be understood that the present disclosure is not limited to the disclosed embodiments. The present disclosure is intended to cover various modifications and equivalent arrangements included in the spirit and scope of the attached claims.

**Claims**

1. A method for a base station, comprising:

   receiving a random access preamble from a user device through reception beamforming; and
   transmitting a random access response to the user device.

2. The method of claim 1, wherein receiving the random access preamble from the user device through the reception beamforming comprises:

   performing the reception beamforming based on a codebook; or
   deriving a receiving beam by a calculation based on a downlink channel measurement.

3. The method of claim 2, wherein performing the reception beamforming based on the codebook comprises:

   processing the random access preamble received from the user device using each codeword in the codebook iteratively; and

selecting the processed random access preamble corresponding to an optimal codeword as the random access preamble received through the reception beamforming.

4. The method of claim 1, wherein transmitting the random access response to the user device comprises: transmitting the random access response through beamformed or non-beamformed broadcasting.

5. The method of claim 1, wherein transmitting the random access response to the user device comprising: transmitting the random access response to the user device through transmission beamforming in a non-broadcast manner.

6. The method of claim 5, wherein transmitting the random access response to the user device through the transmission beamforming comprises:

performing the transmission beamforming on the random access response based on feedback information of a downlink channel state received from the user device; or
performing the transmission beamforming on the random access response by searching in a codebook for a transmission codeword corresponding to an optimal reception codeword based on uplink channel information; or
deriving a transmitting beam for the random access response by a calculation based on an uplink channel measurement.

7. The method of claim 5, wherein receiving the feedback information of the downlink channel state from the user device comprises: receiving the feedback information of the downlink channel state in the random access preamble.

8. The method of claim 7, wherein the feedback information of the downlink channel state is attached explicitly to the random access preamble.

9. The method of claim 7, wherein the feedback information of the downlink channel state is represented implicitly by a location of the random access preamble or a group to which the random access preamble belongs.

10. The method of claim 5, wherein the feedback information of the downlink channel state comprises at least a beam identifier.

11. The method of claim 1, further comprising:

in response to receiving the random access preamble from the user device, determining feedback information of an uplink channel state for the user device; and
transmitting the determined feedback information of the uplink channel state to the user device.

12. The method of claim 11, wherein transmitting the determined feedback information of the uplink channel state to the user device comprises: transmitting the feedback information of the uplink channel state in the random access response.

13. The method of claim 11, wherein the feedback information of the uplink channel state comprises at least an optimal uplink beam direction or beam index.

14. The method of claim 1, further comprising: receiving Message 3 from the user device through reception beamforming.

15. The method of claim 14, wherein receiving the Message 3 from the user device through the reception beamforming comprises: performing the reception beamforming on the Message 3 using a codeword identical or similar to the codeword for the reception beamforming of the random access preamble.

16. The method of claim 14, wherein receiving the Message 3 from the user device through the reception beamforming comprises:

performing the reception beamforming by searching in a codebook for an optimal reception codeword based on uplink channel information; or
deriving a receiving beam for the Message 3 by a calculation based on an uplink channel measurement.

17. The method of claim 14, further comprising: receiving, in the Message 3, an optimal downlink beam direction or beam index fed back by the user device.

18. The method of claim 14, further comprising: in response to receiving the Message 3 from the user device, transmitting Message 4 to the user device through transmission beamforming.

19. The method of claim 18, wherein transmitting the Message 4 to the user device through the transmission beamforming comprises: performing the transmission beamforming on the Message 4 using a codeword identical or similar to the codeword for the transmission beamforming of the random access response.

20. The method of claim 18, further comprising:

performing the transmission beamforming on the Message 4 based on an optimal downlink beam direction or beam index fed back by the user device; or

performing the transmission beamforming on the Message 4 by searching in a codebook for a transmission codeword corresponding to an optimal reception codeword based on uplink channel information; or

deriving a transmitting beam for the Message 4 by a calculation based on an uplink channel measurement.

21. The method of claim 1, wherein the random access preamble is transmitted by the user device through transmission beamforming.

22. The method of claim 21, wherein the transmission beamforming comprises transmission beamforming performed by the user device based on a direction of departure derived from a downlink channel measurement.

23. The method of claim 22, wherein transmitting the random access response to the user device comprises:
transmitting the random access response to the user device through transmission beamforming that is based on information of a direction of departure of the base station.

24. The method of claim 21, further comprising:

receiving Message 3 from the user device based on a direction of arrival derived from an uplink channel measurement; or
transmitting Message 4 to the user device based on a direction of departure corresponding to the direction of arrival derived from the uplink channel measurement.

25. The method of claim 1, wherein receiving the random access preamble from the user device through the reception beamforming comprises:

receiving a same random access preamble from the user device for a plurality of times through the reception beamforming; and
performing signal combination on the plurality of received random access preambles.

26. The method of claim 1, further comprising:
optimizing transmission beamforming and reception beamforming using a correlation between a transmitting beam and a receiving beam if channel reciprocity holds.

27. A method for a user device, comprising:

transmitting a random access preamble to a base station; and
receiving a random access response from the base station through reception beamforming.

28. The method of claim 27, wherein receiving the random access response from the base station through the reception beamforming comprises:

performing the reception beamforming based on a codebook; or
deriving a receiving beam for the random access response by a calculation based on a downlink channel measurement.

29. The method of claim 28, wherein performing the reception beamforming based on the codebook comprises:

processing the random access response received from the base station using each codeword in the codebook iteratively; and
selecting the processed random access response corresponding to an optimal codeword as the random access response received through the reception beamforming.

30. The method of claim 27, wherein receiving the random access response from the base station through the reception beamforming comprises:

calculating a beamforming weight based on feedback information of a downlink channel state detected by the user device; and
performing the reception beamforming using the calculated beamforming weight.

31. The method of claim 30, wherein calculating the beamforming weight based on the feedback information of the downlink channel state detected by the user device comprises:
performing maximum ratio combining based on downlink channel information.

32. The method of claim 27, further comprising:
transmitting feedback information of a downlink channel state to the base station.

33. The method of claim 32, wherein transmitting the feedback information of the downlink channel state to the base station comprises:
transmitting the feedback information of the downlink channel state in the random access preamble.

34. The method of claim 33, wherein the feedback information of the downlink channel state is attached explicitly to the random access preamble.

**35.** The method of claim 33, wherein the feedback information of the downlink channel state is represented implicitly by a location of the random access preamble or a group to which the random access preamble belongs.

**36.** The method of claim 32, wherein the feedback information of the downlink channel state comprises at least a beam identifier.

**37.** The method of claim 27, further comprising:
receiving feedback information of an uplink channel state from the base station.

**38.** The method of claim 37, wherein receiving the feedback information of the uplink channel state from the base station comprises:
receiving the feedback information of the uplink channel state in the random access response.

**39.** The method of claim 37, wherein the feedback information of the uplink channel state comprises at least an optimal uplink beam direction or beam index.

**40.** The method of claim 27, further comprising:
transmitting Message 3 to the base station through transmission beamforming.

**41.** The method of claim 40, wherein transmitting the Message 3 to the base station through the transmission beamforming comprises:

performing the transmission beamforming on the Message 3 by searching in a codebook for a transmission codeword corresponding to an optimal reception codeword based on downlink channel information; or
deriving a transmitting beam for the Message 3 by a calculation based on a downlink channel measurement.

**42.** The method of claim 40, wherein transmitting the Message 3 to the base station through the transmission beamforming comprises:

receiving from the base station an optimal beam direction or beam index of an uplink channel; and
performing the transmission beamforming based on the optimal beam direction or beam index.

**43.** The method of claim 42, wherein receiving from the base station the optimal beam direction or beam index of the uplink channel comprises:
receiving, in the random access response, the optimal beam direction or beam index of the uplink channel.

**44.** The method of claim 40, further comprising:
in response to receiving the random access response from the base station, feeding back to the base station an optimal beam direction or beam index of a downlink channel.

**45.** The method of claim 44, wherein feeding back to the base station the optimal beam direction or beam index of the downlink channel comprises:
including the optimal beam direction or beam index of the downlink channel into the Message 3 for transmission.

**46.** The method of claim 40, further comprising:
receiving Message 4 from the base station through reception beamforming by searching in a codebook for an optimal reception codeword based on downlink channel information or by deriving a receiving beam by a calculation based on an uplink channel measurement.

**47.** The method of claim 27, wherein transmitting the random access preamble to the base station comprises:
transmitting the random access preamble to the base station through transmission beamforming.

**48.** The method of claim 47, wherein the transmission beamforming comprises transmission beamforming based on a direction of departure corresponding to a direction of arrival derived from a downlink channel measurement.

**49.** The method of claim 48, further comprising:
estimating information of the direction of arrival of the user device using a downlink reference signal acquired in a downlink synchronization procedure or in a procedure of receiving a downlink control signal, in order to derive information of the direction of departure of the user device.

**50.** The method of claim 47, wherein receiving the random access response from the base station through the reception beamforming comprises:

performing the reception beamforming using a reception beamforming codeword corresponding to a transmission beamforming codeword; or
performing the reception beamforming by searching for an optimal beam in a predefined receiving codebook.

**51.** The method of claim 47, further comprising:

transmitting Message 3 to the base station based on a direction of departure corresponding to a direction of arrival derived from a downlink channel measurement; or

receiving Message 4 from the base station based on the direction of arrival derived from the downlink channel measurement.

**52.** The method of claim 27, wherein transmitting the random access preamble to the base station comprises:
transmitting a same random access preamble to the base station for a plurality of times.

**53.** The method of claim 52, wherein transmitting the same random access preamble to the base station for a plurality of times comprises:

transmitting the same random access preamble to the base station for a plurality of times based on predetermined timing; or
transmitting the same random access preamble to the base station for a plurality of times only if the random access response fails to be received successfully.

**54.** The method of claim 27, further comprising:
optimizing transmission beamforming and reception beamforming using a correlation between a transmitting beam and a receiving beam if channel reciprocity holds.

**55.** Abase station, comprising:

a receiving unit configured to receive a random access preamble from a user device through reception beamforming; and
a transmitting unit configured to transmit a random access response to the user device.

**56.** A user device, comprising:

a transmitting unit configured to transmit a random access preamble to a base station; and
a receiving unit configured to receive a random access response from the base station through reception beamforming.

100

101

RECEIVE A RANDOM ACCESS PREAMBLE FROM A USER
DEVICE THROUGH RECEPTION BEAMFORMING

102

TRANSMIT A RANDOM ACCESS RESPONSE TO THE
USER DEVICE

**FIG. 1**

200

201

TRANSMIT A RANDOM ACCESS PREAMBLE TO A BASE
STATION

202

RECEIVE A RANDOM ACCESS RESPONSE FROM THE
BASE STATION THROUGH RECEPTION BEAMFORMING

**FIG. 2**

FIG. 3

410

420

USER
DEVICE

BASE
STATION

$\mathbf{w}_i, i = 1, \ldots, N$

400

401☐ USER DEVICE TRANSMITS RANDOM
ACCESS PREAMBLE

TRANSMISSION BEAMFORMING AT USER DEVICE
RECEPTION BEAMFORMING AT BASE STATION

402☐ BASE STATION TRANSMITS RANDOM
ACCESS RESPONSE THROUGH
TRANSMISSION BEAMFORMING

(OPTIONAL: INCLUDE UL CSI/BEAM
DIRECTION FEEDBACK)

1) RECEPTION
BEAMFORMING
THROUGH
CALCULATING
WEIGHT

2) RECEPTION
BEAMFORMING THROUGH
SEARCHING CODEBOOK

1) BEAMFORMED
BROADCAST

2) TRANSMISSION
BEAMFORMING
THROUGH DOD

3) NON-BEAMFORMED
BROADCAST

TRANSMISSION
BEAMFORMING BASED
ON DOD OR FEEDBACK

403: COMMUNICATE MESSAGE 3 THROUGH
TRANSMISSION BEAMFORMING AND
RECEPTION BEAMFORMING

$\mathbf{w}_j$

UPDATE WITH
BEAMFORMED UL
CHANNEL

(OPTIONAL: INCLUDE DL CSI/BEAM DIRECTION
FEEDBACK)

404: COMMUNICATE MESSAGE 4 THROUGH
TRANSMISSION BEAMFORMING AND
RECEPTION BEAMFORMING

TRANSMISSION
BEAMFORMING BASED ON
FEEDBACK OR DOA

**FIG. 4**

510 USER DEVICE

520 BASE STATION

$\mathbf{w}_i, i = 1, \ldots, N$

500

501 USER DEVICE TRANSMITS RANDOM ACCESS PREAMBLE

502 USER DEVICE RETRANSMITS RANDOM ACCESS PREAMBLE

5021 FIXED RETRANSMISSION

5022 NOT RETRANSMIT IF RECEIVES RANDOM ACCESS RESPONSE

503 BASE STATION TRANSMITS RANDOM ACCESS RESPONSE THROUGH TRANSMISSION BEAMFORMING

(OPTIONAL: INCLUDE UL CSI/BEAM DIRECTION FEEDBACK)

1) RECEPTION BEAMFORMING THROUGH CALCULATING WEIGHT

2) RECEPTION BEAMFORMING THROUGH SEARCHING CODEBOOK

1) BEAMFORMED BROADCAST

2) NON-BEAMFORMED BROADCAST

(TRANSMISSION BEAMFORMING BASED ON BEAM DERIVED FROM FEEDBACK)

504: COMMUNICATE MESSAGE 3 THROUGH TRANSMISSION BEAMFORMING AND RECEPTION BEAMFORMING

(OPTIONAL: INCLUDE DL CSI/BEAM DIRECTION FEEDBACK)

$\mathbf{w}_j$

505: COMMUNICATE MESSAGE 4 THROUGH TRANSMISSION BEAMFORMING AND RECEPTION BEAMFORMING

(TRANSMISSION BEAMFORMING USING BEAM ID FEEDBACK)

**FIG. 5**

FIG. 6

700

BASE STATION

701

RECEIVING UNIT

702

TRANSMITTING UNIT

703

DETERMINING UNIT

704

OPTIMIZING UNIT

**FIG. 7**

800

USER DEVICE

803

CALCULATING UNIT

801

TRANSMITTING UNIT

804

ESTIMATING UNIT

802

RECEIVING UNIT

805

OPTIMIZING UNIT

**FIG. 8**

# INTERNATIONAL SEARCH REPORT

International application No.

**PCT/CN2016/079490**

## A. CLASSIFICATION OF SUBJECT MATTER

H04W 74/08 (2009.01) i

According to International Patent Classification (IPC) or to both national classification and IPC

## B. FIELDS SEARCHED

Minimum documentation searched (classification system followed by classification symbols)

H04W; H04B

Documentation searched other than minimum documentation to the extent that such documents are included in the fields searched

Electronic data base consulted during the international search (name of data base and, where practicable, search terms used)

CNTXT; CNABS; CNKI; VEN; USTXT; WOTXT; EPTXT: respond, beam forming, beam-forming, random access, RACH, preamble, RAP, RAR, receive

## C. DOCUMENTS CONSIDERED TO BE RELEVANT

| Category* | Citation of document, with indication, where appropriate, of the relevant passages | Relevant to claim No. |
|---|---|---|
| X | CN 105122662 A (SAMSUNG SDI CO., LTD.), 02 December 2015 (02.12.2015), description, paragraphs [0040]-[0101] and [0330]-[0477], and figures 1-7 and 15-22 | 1-56 |
| X | US 2014348051 A1 (SAMSUNG SDI CO., LTD.), 27 November 2014 (27.11.2014), description, paragraphs [0043]-[0127], and figures 1-10 | 1-56 |
| A | CN 104285385 A (SAMSUNG SDI CO., LTD.), 14 January 2015 (14.01.2015), the whole document | 1-56 |
| A | CN 105379357 A (QUALCOMM INC.), 02 March 2016 (02.03.2016), the whole document | 1-56 |
| A | WO 2016040782 A1 (INTERDIGITAL PATENT HOLDINGS, INC.), 17 March 2016 (17.03.2016), the whole document | 1-56 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 December 2016 (27.12.2016) | **10 January 2017 (10.01.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **CAI, Guoli** Telephone No.: (86-10) **62087675** |

Form PCT/ISA/210 (second sheet) (July 2009)

## INTERNATIONAL SEARCH REPORT
### Information on patent family members

International application No.

**PCT/CN2016/079490**

| Patent Documents referred in the Report | Publication Date | Patent Family | Publication Date |
|---|---|---|---|
| CN 105122662 A | 02 December 2015 | US 9468022 B2 | 11 October 2016 |
| | | US 2014177607 A1 | 26 June 2014 |
| | | EP 2939349 A1 | 04 November 2015 |
| | | WO 2014104758 A1 | 03 July 2014 |
| | | EP 2939349 A4 | 24 August 2016 |
| | | KR 2015100653 A | 02 September 2015 |
| US 2014348051 A1 | 27 November 2014 | KR 20140136630 A | 01 December 2014 |
| | | EP 3000188 A4 | 23 November 2016 |
| | | WO 2014189286 A1 | 27 November 2014 |
| | | EP 3000188 A1 | 30 March 2016 |
| CN 104285385 A | 14 January 2015 | EP 2847881 A1 | 18 March 2015 |
| | | EP 2847881 A4 | 06 January 2016 |
| | | KR 20130125903 A | 20 November 2013 |
| | | US 2013301567 A1 | 14 November 2013 |
| | | WO 2013169035 A1 | 14 November 2013 |
| CN 105379357 A | 02 March 2016 | EP 2974457 A1 | 20 January 2016 |
| | | US 2016029358 A1 | 28 January 2016 |
| | | EP 2974457 A4 | 23 November 2016 |
| | | KR 20150132200 A | 25 November 2015 |
| | | WO 2014139174 A1 | 18 September 2014 |
| | | JP 2016510197 A | 04 April 2016 |
| WO 2016040782 A1 | 17 March 2016 | None | |

Form PCT/ISA/210 (patent family annex) (July 2009)